# EUROPEAN PATENT APPLICATION

(11) **EP 4 376 129 A1**
(43) Date of publication of application: **29.05.2024**
(21) Application number: 23206079.8
(22) Date of filing: 26.10.2023
(51) Int. Cl.: H01M 4/62, H01M 10/052

(54) **BINDER COMPOSITION FOR ALL SOLID STATE SECONDARY BATTERY AND METHOD FOR PRODUCING THE SAME, SLURRY COMPOSITION AND ALL SOLID STATE SECONDARY BATTERY COMPRISING THE SAME**

(30) Priority: 28.10.2022 KR 20220141786
(71) Applicant: Korea Kumho Petrochemical Co., Ltd., Seoul 04542 (KR)
(72) Inventor: KIM, Jeong Geun, 34402 Daejeon (KR); SUH, Jae Kon, 34191 Daejeon (KR); SONG, In Oh, 02829 Seoul (KR); CHOI, Young Gil, 34675 Daejeon (KR)
(74) Representative: Beck & Rössig European Patent Attorneys

(57) **Abstract**

Disclosed are a binder composition for an all-solid-state secondary battery, including a copolymer including a conjugated diene-based monomer, an aromatic vinyl-based monomer, and an ethylenically unsaturated acid monomer, a trithiocarbonate-based compound, a mercaptan-based compound, and a solvent, wherein a weight average molecular weight (Mw) of the copolymer is 50,000 to 200,000, and a molecular weight distribution (Mw/Mn) is 1 to 5, a method of preparing the same, a slurry composition for a cathode or a solid electrolyte including the same, and a secondary battery manufactured therefrom.

## Description

### CROSS-REFERENCE TO RELATED APPLICATION

This application claims priority to and the benefit of Korean Patent Application No. 2022-0141786, filed on 28 October, 2022, the disclosure of which is incorporated herein by reference in its entirety.

### BACKGROUND

### 1. Field of the Invention

The present invention relates to a binder composition for an all-solid-state secondary battery, and a slurry composition and all-solid-state secondary battery including the same.

### 2. Discussion of Related Art

Secondary batteries capable of charging and discharging are used not only in small electronic devices such as mobile phones and laptop computers, but also in large vehicles such as hybrid vehicles and electric vehicles. Accordingly, development of secondary batteries having higher stability and energy density is actively progressing.

An existing lithium ion battery is composed of a carbon-based anode, an electrolyte containing an organic solvent, and a lithium oxide cathode, wherein lithium ions are released from the cathode and move to the carbon-based anode through the electrolyte during charging by using chemical reactions occurring at the cathode and the anode, and discharging proceeds in reverse to the charging process. Accordingly, the binder is mainly a polymer material that does not react with lithium and can stably fix the electrode active material to the electrode current collector, and in particular, polyvinylidene fluoride (PVDF) and carboxymethylcellulose (CMC) are commonly used.

Meanwhile, since a currently commercialized lithium ion battery is composed of a cell based on a liquid electrolyte containing an organic solvent, a highly volatile organic solvent may leak due to impact and the like, and as energy density is improved, it is highly likely that these battery stability problems will occur.

In order to solve this problem, research and development on an all-solid-state secondary battery including a solid electrolyte to replace a liquid electrolyte is being conducted. A solid electrolyte can be divided into sulfide-, oxide-, and polymer-solid electrolytes, and among them, sulfide-based solid electrolytes have excellent ionic conductivity and mechanical properties, and thus, research thereon is being most actively conducted. However, sulfide-based solid electrolytes are very vulnerable to moisture, so that they have the disadvantage of having to use non-polar solvents when preparing slurries.

Meanwhile, the cathode material and solid electrolyte of an all-solid-state secondary battery are metal inorganic materials, and in order to maximize the adhesive strength between them, it is necessary to use a polar binder material.

Ultimately, in order to provide an all-solid-state secondary battery with excellent ionic conductivity and adhesive strength, the development of a binder material that is polar and has excellent solubility in non-polar solvents is required.

### SUMMARY OF THE INVENTION

One of the many purposes of the present invention is to provide a binder composition that may implement an all-solid-state secondary battery with excellent ionic conductivity and adhesive strength.

According to one aspect of the present invention, the present invention provides a binder composition for an all-solid-state secondary battery, including a copolymer containing a conjugated diene-based monomer, an aromatic vinyl-based monomer, and an ethylenically unsaturated acid monomer, a trithiocarbonate-based compound, a mercaptan-based compound, and a solvent, wherein a weight average molecular weight (Mw) of the copolymer is 50,000 to 200,000, and a molecular weight distribution (Mw/Mn) is 1 to 5.

In one preferred embodiment, the binder composition may include 30 to 79 parts by weight of the conjugated diene-based monomer, 20 to 60 parts by weight of the aromatic vinyl-based monomer, and 1 to 10 parts by weight of the ethylenically unsaturated acid monomer, based on 100 parts by weight of the copolymer.

In one preferred embodiment, the copolymer may further include an alkyl ester-based monomer, and the binder composition may include 30 to 79 parts by weight of the conjugated diene-based monomer, 20 to 60 parts by weight of the aromatic vinyl-based monomer, and 1 to 10 parts by weight of the ethylenically unsaturated acid monomer, and 10 parts by weight or less of the alkyl ester-based monomer (excluding 0 parts by weight), based on 100 parts by weight of the copolymer.

In one preferred embodiment, the binder composition may include 0.2 to 1.0 part by weight of the trithiocarbonate-based compound and 0.5 to 3.0 parts by weight of the mercaptan-based compound, based on 100 parts by weight of the copolymer.

In one preferred embodiment, a weight ratio of the trithiocarbonate-based compound and the mercaptan-based compound may be 1:0.5 to 1:3.

In one preferred embodiment, the conjugated diene-based monomer may be one or more selected from the group consisting of 1,3-butadiene, 2,3-dimethyl-1,3-butadiene, 2-ethyl-1,3-butadiene, and 1,3-pentadiene.

In one preferred embodiment, the aromatic vinyl-based monomer may be one or more selected from the group consisting of styrene, α-methylstyrene, 2-methylstyrene, 3-methylstyrene, 4-methylstyrene, 2,4-dimethylstyrene, 2,4-diisopropylstyrene, 4-propylstyrene, 4 -cyclohexylstyrene, 4-(p-methylphenyl)styrene, 5-tert-butyl-2-methylstyrene, tert-butoxystyrene, 2-tert-butylstyrene, 3-tert-butylstyrene, 4-tert-butylstyrene, N,N-dimethylaminoethylstyrene, 1-vinyl-5-hexylnaphthalene, 1-vinylnaphthalene, divinylnaphthalene, divinylbenzene, trivinylbenzene, vinylbenzyldimethylamine, (4-vinylbenzyl)dimethylaminoethyl ether, vinylpyridine, vinylxylene, diphenylethylene, and halogen-substituted styrene.

In one preferred embodiment, the ethylenically unsaturated acid monomer may be one or more selected from the group consisting of acrylic acid, methacrylic acid, itaconic acid, maleic acid, fumaric acid, maleic anhydride, citraconic anhydride, styrene sulfonic acid, monobutyl fumarate, monobutyl maleate, and mono-2-hydroxypropyl maleate.

In one preferred embodiment, the alkyl ester-based monomer may be one or more selected from the group consisting of methyl methacrylate, ethyl methacrylate, butyl methacrylate, methyl acrylate, ethyl acrylate, and butyl acrylate.

In one preferred embodiment, the trithiocarbonate-based compound may be one or more selected from the group consisting of dibenzyl trithiocarbonate, dimethyl trithiocarbonate, and bis(carboxymethyl) trithiocarbonate.

In one preferred embodiment, the mercaptan-based compound may be one or more selected from the group consisting of n-octyl mercaptan, n-dodecyl mercaptan, and t-dodecyl mercaptan.

In one preferred embodiment, the solvent may be one or more selected from the group consisting of benzene, toluene, xylene, hexane, cyclohexane, methylcyclohexane, ethylcyclohexane, nonane, decane, decalin, tetralin, dodecane, dibromomethane, dichloromethane, chloroform, butyl butyrate, hexyl butyrate, and isobutyl isobutyrate.

According to another aspect of the present invention, the present invention provides a method of preparing a binder composition for an all-solid-state secondary battery, including:
(a) preparing a copolymer by polymerizing a conjugated diene-based monomer, an aromatic vinyl-based monomer, and an ethylenically unsaturated acid monomer in the presence of a trithiocarbonate-based compound and a mercaptan-based compound; and
(b) dissolving the copolymer, the trithiocarbonate-based compound, and the mercaptan-based compound in a solvent,
wherein a weight average molecular weight (Mw) of the copolymer is 50,000 to 200,000, and a molecular weight distribution (Mw/Mn) is 1 to 5.

In one preferred embodiment, step (a) may be performed by emulsion polymerization in the presence of an emulsifier and a polymerization initiator.

In one preferred embodiment, the emulsifier may be one or more anionic emulsifiers selected from the group consisting of sodium alkyl diphenyl ether disulfonates, sodium polyoxyethylene alkyl ether sulfates, sodium polyoxyethylene aryl ether sulfates, sodium alkyl sulfates, sodium alkyl benzene sulfonates, and dialkyl sodium sulfosuccinates.

In one preferred embodiment, the polymerization initiator may be one or more redox-based polymerization initiators selected from the group consisting of p-menthane hydroperoxide, t-butyl hydroperoxide, diisopropylbenzene hydroperoxide, and cumene hydroperoxide.

According to still another aspect of the present invention, a slurry composition for a cathode including the binder composition and a cathode active material is provided.

According to yet another aspect of the present invention, a slurry composition for a solid electrolyte including the binder composition and a solid electrolyte is provided.

In one preferred embodiment, the solid electrolyte may be a sulfide-based solid electrolyte.

According to yet another aspect, the present invention provides an all-solid-state secondary battery including a cathode; an anode; and a solid electrolyte, wherein at least one of the cathode and the solid electrolyte is prepared by applying a slurry composition including the binder composition and drying a solvent.

### DETAILED DESCRIPTION OF EXEMPLARY EMBODIMENTS

Hereinafter, one aspect of the present specification will be described. However, the description of the present specification may be implemented in several different forms, and thus is not limited to the embodiments described herein. In order to clearly illustrate the present invention, parts irrelevant to the description are omitted.

Throughout the present specification, when a part is said to "include" a component, this means that other components may be further included, not excluded, unless specifically stated otherwise.

When a range of numerical values is recited herein, the values have the precision of the significant figures provided in accordance with the standard rules in chemistry for significant figures, unless a specific range is otherwise stated. For example, 10 includes the range of 5.0 to 14.9, and 10.0 includes the range of 9.50 to 10.49.

### Binder composition for all-solid-state secondary battery

One aspect of the present invention provides a binder composition for an all-solid-state secondary battery including a copolymer including a conjugated diene-based monomer, an aromatic vinyl-based monomer, and an ethylenically unsaturated acid monomer, a trithiocarbonate-based compound, a mercaptan-based compound, and a solvent.

Hereinafter, each of the copolymer, the trithiocarbonate-based compound, the mercaptan-based compound, and the solvent will be described in detail.

### Copolymer

The copolymer is a component that functions as a binder and includes a conjugated diene-based monomer, an aromatic vinyl-based monomer, and an ethylenically unsaturated acid monomer, and may further include an alkyl ester-based monomer, if necessary.

The conjugated diene-based monomer may be one or more selected from the group consisting of 1,3-butadiene, 2,3-dimethyl-1,3-butadiene, 2-ethyl-1,3-butadiene, and 1,3-pentadiene, but is not limited thereto.

A content of the conjugated diene-based monomer may be 30 to 79 parts by weight based on 100 parts by weight of the copolymer. For example, the content may be 30 parts by weight, 31 parts by weight, 32 parts by weight, 33 parts by weight, 34 parts by weight, 35 parts by weight, 36 parts by weight, 37 parts by weight, 38 parts by weight, 39 parts by weight, 40 parts by weight, 41 parts by weight, 42 parts by weight, 43 parts by weight, 44 parts by weight, 45 parts by weight, 46 parts by weight, 47 parts by weight, 48 parts by weight, 49 parts by weight, 50 parts by weight, 51 parts by weight, 52 parts by weight, 53 parts by weight, 54 parts by weight, 55 parts by weight, 56 parts by weight, 57 parts by weight, 58 parts by weight, 59 parts by weight, 60 parts by weight, 61 parts by weight, 62 parts by weight, 63 parts by weight, 64 parts by weight, 65 parts by weight, 66 parts by weight, 67 parts by weight, 68 parts by weight, 69 parts by weight, 70 parts by weight, 71 parts by weight, 72 parts by weight, 73 parts by weight, 74 parts by weight, 75 parts by weight, 76 parts by weight, 77 parts by weight, 78 parts by weight, 79 parts by weight, or a value between two of these values. When the content of the conjugated diene-based monomer is within the above range, both rubber properties and excellent adhesive strength suitable for a binder can be achieved.

The aromatic vinyl-based monomer may be one or more selected from the group consisting of styrene, α-methylstyrene, 2-methylstyrene, 3-methylstyrene, 4-methylstyrene, 2,4-dimethylstyrene, 2,4-diisopropylstyrene, 4-propylstyrene, 4 -cyclohexylstyrene, 4-(p-methylphenyl)styrene, 5-tert-butyl-2-methylstyrene, tert-butoxystyrene, 2-tert-butylstyrene, 3-tert-butylstyrene, 4-tert-butylstyrene, N,N-dimethylaminoethylstyrene, 1-vinyl-5-hexylnaphthalene, 1-vinylnaphthalene, divinylnaphthalene, divinylbenzene, trivinylbenzene, vinylbenzyldimethylamine, (4-vinylbenzyl)dimethylaminoethyl ether, vinylpyridine, vinylxylene, diphenylethylene, and halogen-substituted styrene, but is not limited thereto.

A content of the aromatic vinyl-based monomer may be 20 to 60 parts by weight based on 100 parts by weight of the copolymer. For example, the content may be 20 parts by weight, 21 parts by weight, 22 parts by weight, 23 parts by weight, 24 parts by weight, 25 parts by weight, 26 parts by weight, 27 parts by weight, 28 parts by weight, 29 parts by weight, 30 parts by weight, 31 parts by weight, 32 parts by weight, 33 parts by weight, 34 parts by weight, 35 parts by weight, 36 parts by weight, 37 parts by weight, 38 parts by weight, 39 parts by weight, 40 parts by weight, 41 parts by weight, 42 parts by weight, 43 parts by weight, 44 parts by weight, 45 parts by weight, 46 parts by weight, 47 parts by weight, 48 parts by weight, 49 parts by weight, 50 parts by weight, 51 parts by weight, 52 parts by weight, 53 parts by weight, 54 parts by weight, 55 parts by weight, 56 parts by weight, 57 parts by weight, 58 parts by weight, 59 parts by weight, 60 parts by weight, or a value between two of these values. When the content of the aromatic vinyl-based monomer is within the above range, both rubber properties and excellent adhesive strength suitable for a binder can be achieved.

The ethylenically unsaturated acid monomer may be one or more selected from the group consisting of acrylic acid, methacrylic acid, itaconic acid, maleic acid, fumaric acid, maleic anhydride, citraconic anhydride, styrene sulfonic acid, monobutyl fumarate, monobutyl maleate, and mono-2-hydroxypropyl maleate, but is not limited thereto.

A content of the ethylenically unsaturated acid monomer may be 1 to 10 parts by weight based on 100 parts by weight of the copolymer. For example, the content may be 1 part by weight, 2 parts by weight, 3 parts by weight, 4 parts by weight, 5 parts by weight, 6 parts by weight, 7 parts by weight, 8 parts by weight, 9 parts by weight, 10 parts by weight, or a range between two of these values. When the content of the ethylenically unsaturated acid monomer is too low, the adhesive strength to the current collector may decrease, and conversely, when the content is too high, the solubility in a non-polar solvent may be significantly reduced due to increased polarity.

The alkyl ester-based monomer may be one or more selected from the group consisting of methyl methacrylate, ethyl methacrylate, butyl methacrylate, methyl acrylate, ethyl acrylate, and butyl acrylate, but is not limited thereto.

A content of the alkyl ester-based monomer may be 0 to 10% by weight based on 100% by weight of the copolymer. For example, the content may be 0% by weight, 0.1% by weight, 0.2% by weight, 0.3% by weight, 0.4% by weight, 0.5% by weight, 0.6% by weight, 0.7% by weight, 0.8% by weight, 0.9% by weight, 1% by weight, 2% by weight, 3% by weight, 4% by weight, 5% by weight, 6% by weight, 7% by weight, 8% by weight, 9% by weight, 10% by weight, or a range between two of these values. The alkyl ester-based monomer may help improve adhesive strength to the current collector, but when the content is too high, the solubility in a non-polar solvent may be significantly reduced due to increased polarity.

A weight average molecular weight (Mw) of the copolymer may be 50,000 to 200,000, preferably 60,000 to 180,000, and more preferably 70,000 to 170,000. When the weight average molecular weight of the copolymer is within the above range, it possible to achieve both rubber properties and excellent adhesive strength suitable for a binder, as well as improved solubility in non-polar solvents.

A molecular weight distribution (Mw/Mn) of the copolymer may be 1 to 5, preferably 2 to 4, and more preferably 2.5 to 3.5. When the molecular weight distribution of the copolymer is within the above range, it possible to achieve both rubber properties and excellent adhesive strength suitable for a binder, as well as improved solubility in non-polar solvents.

Here, "molecular weight distribution" is the ratio of Mw to Mn, where Mn refers to a number average molecular weight and Mw refers to the weight average molecular weight described above. The closer the molecular weight distribution is to 1, the narrower the molecular weight distribution is, meaning the molecular weight is more uniform.

### Trithiocarbonate-based compound

The trithiocarbonate-based compound functions as a reversible addition fragmentation chain transfer agent (RAFT agent) in the preparation of copolymers and serves to control the molecular weight and molecular weight distribution of the copolymer through interaction with the mercaptan-based compound, which will be described later.

The trithiocarbonate-based compound may be one or more selected from the group consisting of dibenzyl trithiocarbonate, dimethyl trithiocarbonate, and bis(carboxymethyl) trithiocarbonate, preferably dibenzyl trithiocarbonate, but is not limited thereto.

A content of the trithiocarbonate-based compound may be 0.2 to 1.0 part by weight based on 100 parts by weight of the copolymer. For example, the content may be 0.2 parts by weight, 0.3 parts by weight, 0.4 parts by weight, 0.5 parts by weight, 0.6 parts by weight, 0.7 parts by weight, 0.8 parts by weight, 0.9 parts by weight, 1.0 part by weight, or a value between two of these values. When the content of the trithiocarbonate-based compound is too low, it may be difficult to develop RAFT characteristics, and conversely, when the content is too high, the reaction rate may significantly decrease, making application difficult.

### Mercaptan-based compound

The mercaptan-based compound is a compound including a sulfanyl group (-S-H), which compensates for the slow polymerization rate caused by the introduction of the RAFT agent, and controls the molecular weight and molecular weight distribution of the copolymer through interaction with the trithiocarbonate-based compound.

The mercaptan-based compound may be one or more selected from the group consisting of n-octyl mercaptan, n-dodecyl mercaptan, and t-dodecyl mercaptan, preferably t-dodecyl mercaptan, but is not limited thereto.

A content of the mercaptan-based compound may be 0.5 to 3.0 parts by weight based on 100 parts by weight of the copolymer. For example, the content may be 0.5 parts by weight, 0.6 parts by weight, 0.7 parts by weight, 0.8 parts by weight, 0.9 parts by weight, 1.0 part by weight, 1.1 parts by weight, 1.2 parts by weight, 1.3 parts by weight, 1.4 parts by weight, 1.5 parts by weight, 1.6 parts by weight, 1.7 parts by weight, 1.8 parts by weight, 1.9 parts by weight, 2.0 parts by weight, 2.1 parts by weight, 2.2 parts by weight, 2.3 parts by weight, 2.4 parts by weight, 2.5 parts by weight, 2.6 parts by weight, 2.7 parts by weight, 2.8 parts by weight, 2.9 parts by weight, 3.0 parts by weight, or a range between two of these values. When the content of the mercaptan-based compound satisfies the above range, it may be advantageous for adjusting the molecular weight and molecular weight distribution of the copolymer to a desired level.

According to one preferred embodiment, a weight ratio of the trithiocarbonate-based compound and the mercaptan-based compound may be 1:0.5 to 1:3, preferably 1:0.8 to 1:2.5, and more preferably 1:1 to 1:2, but is not limited thereto. When the weight ratio of the trithiocarbonate-based compound and the mercaptan-based compound satisfies the above range, it may be advantageous for adjusting the molecular weight and molecular weight distribution of the copolymer to a desired level.

### Solvent

The solvent is not particularly limited as long as it may disperse the above-described copolymer, trithiocarbonate-based compound, and mercaptan-based compound. However, in order to apply the solvent to a binder composition for an all-solid-state secondary battery including a sulfide-based solid electrolyte, it is preferable to use a non-polar solvent. For example, the solvent may be one or more non-polar solvents selected from the group consisting of benzene, toluene, xylene, hexane, cyclohexane, methylcyclohexane, ethylcyclohexane, nonane, decane, decalin, tetralin, dodecane, dibromomethane, dichloromethane, chloroform, butyl butyrate, hexyl butyrate, and isobutyl isobutyrate, but is not limited thereto.

The solvent may have a boiling point of 80 °C or more at 1 atm. For example, the solvent may have a boiling point of 80 °C or more, 85 °C or more, 90 °C or more, 95 °C or more, 100 °C or more, 110 °C or more, 120 °C or more, 150 °C or more, 170 °C or more, or 200 °C or more, but is not limited thereto.

### Method of preparing binder composition for all-solid-state secondary battery

Another aspect of the present invention provides a method of preparing a binder composition for an all-solid-state secondary battery, including (a) preparing a copolymer by polymerizing a conjugated diene-based monomer, an aromatic vinyl-based monomer, and an ethylenically unsaturated acid monomer in the presence of a trithiocarbonate-based compound and a mercaptan-based compound, and (b) dissolving the copolymer, the trithiocarbonate-based compound, and the mercaptan-based compound in a solvent.

Descriptions of the trithiocarbonate-based compound, the mercaptan-based compound, the conjugated diene-based monomer, the aromatic vinyl-based monomer, and the ethylenically unsaturated acid monomer are as described above.

Step (a) may be performed by emulsion polymerization in the presence of an emulsifier and a polymerization initiator.

The emulsifier may be an anionic emulsifier, and for example, may be one or more selected from the group consisting of sodium alkyl diphenyl ether disulfonates, sodium polyoxyethylene alkyl ether sulfates, sodium polyoxyethylene aryl ether sulfates, sodium alkyl sulfates, sodium alkyl benzene sulfonates, and dialkyl sodium sulfosuccinates, but is not limited thereto.

The emulsifier may be used in an amount of 0.5 to 5.0 parts by weight based on a total of 100 parts by weight of the conjugated diene-based monomer, the aromatic vinyl-based monomer, and the ethylenically unsaturated acid monomer.

The polymerization initiator may be a redox polymerization initiator, and for example, may be one or more selected from the group consisting of p-menthane hydroperoxide, t-butyl hydroperoxide, diisopropylbenzene hydroperoxide, and cumene hydroperoxide. In addition, when a redox-based initiator is used as a polymerization initiator, ferrous sulfate (FeSO₄), sodium ethylenediaminetetraacetate, and sodium formaldehyde sulfoxylate may be further used as a redox catalyst.

The polymerization initiator may be used in an amount of 0.05 to 1.0 part by weight based on a total of 100 parts by weight of the conjugated diene-based monomer, the aromatic vinyl-based monomer, and the ethylenically unsaturated acid monomer.

Step (b) may be a step of separating the copolymer prepared in step (a), the trithiocarbonate-based compound, and the mercaptan-based compound from the reaction system and then dissolving them in a solvent suitable for a slurry composition for an all-solid-state secondary battery.

When the same solvent as the solvent in step (b) is used in step (a), step (b) may be omitted, but even in this case, impurities such as emulsifiers and polymerization initiators need to be removed.

### Slurry composition for cathode

Still another aspect of the present invention provides a slurry composition for a cathode including the above-described binder composition and a cathode active material.

A content of the binder composition may be 0.01 to 30 parts by weight based on 100 parts by weight of the total solid content of the cathode slurry composition. When the content of the binder composition is too low, the binding force may decrease and the cathode active material and a conductive material may detach, and conversely, when the content is too high, the proportion of the cathode active material and the conductive material may be relatively reduced, thereby reducing battery capacity.

A lithium salt of a transition metal oxide may be used as the cathode active material, and for example, layered rock salt type and spinel type lithium-containing metal oxides may be used. Specific examples of the layered rock salt type cathode active materials may include LCO cathode materials containing cobalt, NMO cathode materials containing manganese, LFP cathode materials containing phosphoric acid and iron, NCM cathode materials containing nickel, cobalt and manganese, and NCA cathode materials containing nickel, cobalt, and aluminum. In addition, specific examples of the spinel type cathode active material may include lithium manganate, and the like.

A content of the cathode active material may be 60 to 97 parts by weight based on 100 parts by weight of the total solid content of the slurry composition for a cathode. When the content of the cathode active material is too low, the battery capacity of the entire cell may decrease, and conversely, when the content is too high, as the content of the remaining components except the cathode active material may be relatively reduced, the flowability, conductivity, or physical properties of the cathode slurry composition may be reduced.

The slurry composition for a cathode may further include a conductive material, if necessary.

The conductive material is used to provide conductivity to the cathode, and may be graphite such as natural graphite or artificial graphite; carbon black such as carbon black, acetylene black, ketjen black, channel black, furnace black, lamp black, and thermal black; conductive fibers such as carbon fibers and metal fibers; metal powders such as carbon fluoride, aluminum, and nickel powders; conductive whiskers such as zinc oxide and potassium titanate; conductive metal oxides such as titanium oxide; a conductive material such as a polyphenylene derivative; or a highly functional nano-carbon such as carbon nanotubes or graphene, but is not limited thereto.

A content of the conductive material may be 30 parts by weight or less based on 100 parts by weight of the total solid content of the slurry composition for a cathode. When the content of the conductive material is too high, the flexibility of the cathode may decrease.

### Slurry composition for solid electrolyte

Yet another aspect of the present invention provides a slurry composition for a solid electrolyte including the above-described binder composition and a solid electrolyte.

A sulfide-based electrolyte, an oxide-based electrolyte, and a polymer-based electrolyte may be used as a solid electrolyte, and among these, the sulfide-based electrolyte has the advantage of excellent ionic conductivity and mechanical properties. The sulfide-based electrolyte may be, for example, LGPS, LPS, LPSCl, LSS, or LSGM, but is not limited thereto. The oxide-based electrolyte may be, for example, LiPON, LLZO, LLTO, NASICON, LAGP, or LATP, but is not limited thereto. The polymer-based electrolyte may refer to, for example, an electrolyte solution or an electrolyte filled in a polymer matrix such as PVdF or PEO. According to one example, the solid electrolyte may be a composite electrolyte of two or more of the above-mentioned electrolytes.

A content of the solid electrolyte may be 50 to 99.9 parts by weight, preferably 70 to 99.5 parts by weight, and more preferably 90 to 99.0 parts by weight, based on 100 parts by weight of the total solid content of the slurry composition for a solid electrolyte.

### All-solid-state secondary battery

According to yet another aspect, the present invention provides an all-solid-state secondary battery including a cathode; an anode; and a solid electrolyte, wherein at least one of the cathode and the solid electrolyte is prepared by applying a slurry composition including the above-described binder composition and drying a solvent.

Hereinafter, examples of this specification will be described in more detail. However, the following experimental results describe only representative experimental results among the examples, and the scope and content of the present invention may not be construed as being reduced or limited by the examples. Each effect of the various implementations of the present invention not explicitly presented below will be specifically described in the corresponding section.

### Example 1

A monomer mixture consisting of 71 parts by weight of butadiene, 27 parts by weight of styrene, and 2 parts by weight of methyl methacrylate was input to a reaction vessel, and 350 parts by weight of water as a solvent, 3 parts by weight of sodium dodecyl diphenyl ether disulfonate as an emulsifier, 0.8 parts by weight of dibenzyl trithiocarbonate, and 0.9 parts by weight of t-dodecyl mercaptan were input.

The reactor temperature was adjusted to 30 °C, and then 0.12 parts by weight of p-menthane hydroperoxide as a polymerization initiator and 0.02 parts by weight of ferrous sulfate as a catalyst were input to initiate the reaction.

After 18 hours, 0.1 parts by weight of N-isopropyl hydroxylamine was input to terminate the polymerization, and the mixture was stirred for 30 minutes.

The polymerized mixture was reprecipitated with toluene and ethanol, then dried in a vacuum oven at 40 °C for 4 hours or more to remove the remaining solvent, thereby preparing a binder material for a secondary battery. The weight average molecular weight (Mw) of the prepared copolymer was 150,000, and the molecular weight distribution (Mw/Mn) was 3.2.

### Comparative Example 1

A binder material for a secondary battery was prepared in the same manner as in Example 1, except that dibenzyl trithiocarbonate was not input and 0.8 parts by weight of t-dodecyl mercaptan was input in preparing the copolymer. The weight average molecular weight (Mw) of the prepared copolymer was 250,000, and the molecular weight distribution (Mw/Mn) was 5.4.

### Comparative Example 2

SBR 1502 (Kumho Petrochemical), which is a styrene-butadiene copolymer including 23.5 parts by weight of styrene as an aromatic vinyl-based monomer, was prepared as a binder material for a secondary battery. The weight average molecular weight (Mw) of the styrene-butadiene copolymer was 500,000, and the molecular weight distribution (Mw/Mn) was 5.2.

### Comparative Example 3

Polyvinylidene fluoride (PVDF) was prepared as a binder material for a secondary battery. The weight average molecular weight of the polyvinylidene fluoride (PVDF) was 100,000 or less.

### Experimental Example 1

The solubility in non-polar solvents was evaluated for the binder materials for secondary batteries obtained according to Example and Comparative Examples. Specifically, cyclohexane, xylene, butyl butyrate, and isobutyl isobutyrate were prepared as nonpolar solvents, and 5 g of the binder material was dissolved in 95 g of each non-polar solvent. For all non-polar solvents, when a dilute and transparent solution was formed , it was evaluated as "⊚"; for some non-polar solvents, when a dilute but opaque solution was formed, it was evaluated as "∘"; for some non-polar solvents, when the binder material aggregated in a gel form and a dilute solution was not formed, it was evaluated as "△"; and for all non-polar solvents, when the binder material aggregated into a gel and did not form a dilute solution, it was evaluated as "X", and the results are shown in Table 1 below.

**[Table 1]**

| | Example 1 | Comparative Example 1 | Comparative Example 2 | Comparative Example 3 |
|---|---|---|---|---|
| Solubility | ⊚ | ○ | △ | ⊚ |

Referring to Table 1, it can be confirmed that the binder material for a secondary battery of Example 1 exhibits solubility in non-polar solvents at the same or similar level to polyvinylidene fluoride (PVDF), which has been conventionally used as a binder material for a secondary battery. In contrast, Comparative Examples 1 and 2 did not include a trithiocarbonate-based compound and/or a mercaptan-based compound, so the molecular weight and molecular weight distribution were outside the range of the present invention, and as a result, solubility in non-polar solvents appeared to be reduced.

### Example 2

NCM811 as a cathode active material, azirodite (LPSCI) as a solid electrolyte, and conductive carbon as a conductive material were prepared and then 5 parts by weight of the binder material for a secondary battery of Example 1, 5 parts by weight of the conductive material, 63 parts by weight of the cathode active material, and 27 parts by weight of the solid electrolyte were stirred and mixed in 100 parts by weight of isobutyl isobutyrate for 1 hour to obtain a slurry composition for a cathode.

Aluminum foil was prepared as a cathode current collector, and the slurry composition for a cathode was applied and dried on the cathode current collector to manufacture a cathode.

### Comparative Example 4

A cathode was manufactured in the same manner as in Example 2, except that the binder material for a secondary battery of Comparative Example 1 was used as a binder material.

### Comparative Example 5

A cathode was manufactured in the same manner as in Example 2, except that the binder material for a secondary battery of Comparative Example 2 was used as a binder material.

### Comparative Example 6

A cathode was manufactured in the same manner as in Example 2, except that the binder material for a secondary battery of Comparative Example 3 was used as a binder material.

### Experimental Example 2

The adhesive strength of the cathodes obtained according to Example and Comparative Examples was evaluated using a TO-102 universal testing machine of TEST ONE. Specifically, the cathode was attached to a slide using double-sided tape, and adhesive strength was evaluated using a 90° peel test method. The results are shown in Table 2 below.

**[Table 2]**

| | Example 2 | Comparative Example 4 | Comparative Example 5 | Comparative Example 6 |
|---|---|---|---|---|
| Adhesive strength (N/mm) | 3.0 | 0.5 | 0.9 | 0.6 |

Referring to Table 2, it can be confirmed that the cathode of Example 2 shows significantly excellent results with an adhesive strength of 2.0 N/mm or more. In contrast, Comparative Examples 1 and 2 did not include a trithiocarbonate-based compound and/or a mercaptan-based compound, so the molecular weight and molecular weight distribution were outside the range of the present invention, and as a result, adhesive strength appeared to be reduced.

According to the present invention, it is possible to provide a binder composition that can implement an all-solid-state secondary battery with excellent ionic conductivity and adhesive strength.

The effects of the present invention are not limited to the above-described effect and should be understood to include all effects that can be inferred from the configuration described in the detailed description or claims of the present specification.

The description of the present specification described above is for illustrative purposes, and it should be understood that those of ordinary skill in the art to which one aspect of the present specification belongs can easily modify it into other specific forms without changing the technical idea or essential features described in this specification. Therefore, it should be understood that the embodiments described above are illustrative in all respects and not restrictive. For example, each component described as a single type may be implemented in a distributed form, and likewise components described as distributed may be implemented in a combined form.

The scope of the present specification is indicated by the following claims, and all changes or modifications derived from the meaning and scope of the claims and their equivalents should be construed as being included in the scope of the present specification.

## Claims

1. A binder composition for an all-solid-state secondary battery, comprising:
a copolymer including a conjugated diene-based monomer, an aromatic vinyl-based monomer, and an ethylenically unsaturated acid monomer;
a trithiocarbonate-based compound;
a mercaptan-based compound; and
a solvent,
wherein a weight average molecular weight (Mw) of the copolymer is 50,000 to 200,000, and a molecular weight distribution (Mw/Mn) is 1 to 5.

2. The binder composition of claim 1, comprising the following, based on 100 parts by weight of the copolymer:
30 to 79 parts by weight of the conjugated diene-based monomer;
20 to 60 parts by weight of the aromatic vinyl-based monomer; and
1 to 10 parts by weight of the ethylenically unsaturated acid monomer.

3. The binder composition of claim 1, wherein
the copolymer further includes an alkyl ester-based monomer, and
the binder composition includes the following, based on 100 parts by weight of the copolymer:
30 to 79 parts by weight of the conjugated diene-based monomer;
20 to 60 parts by weight of the aromatic vinyl-based monomer;
1 to 10 parts by weight of the ethylenically unsaturated acid monomer; and
10 parts by weight or less of the alkyl ester-based monomer, excluding 0 parts by weight.

4. The binder composition of one of claims 1 to 3, comprising the following, based on 100 parts by weight of the copolymer:
0.2 to 1.0 part by weight of the trithiocarbonate-based compound; and
0.5 to 3.0 parts by weight of the mercaptan-based compound.

5. The binder composition of one of claims 1 to 4, wherein a weight ratio of the trithiocarbonate-based compound and the mercaptan-based compound is 1:0.5 to 1:3.

6. The binder composition of one of claims 1 to 5, wherein the conjugated diene-based monomer is one or more selected from the group consisting of 1,3-butadiene, 2,3-dimethyl-1,3-butadiene, 2-ethyl-1,3-butadiene, and 1,3-pentadiene,
wherein the aromatic vinyl-based monomer is one or more selected from the group consisting of styrene, α-methylstyrene, 2-methylstyrene, 3-methylstyrene, 4-methylstyrene, 2,4-dimethylstyrene, 2,4-diisopropylstyrene, 4-propylstyrene, 4 -cyclohexylstyrene, 4-(p-methylphenyl)styrene, 5-tert-butyl-2-methylstyrene, tert-butoxystyrene, 2-tert-butylstyrene, 3-tert-butylstyrene, 4-tert-butylstyrene, N,N-dimethylaminoethylstyrene, 1-vinyl-5-hexylnaphthalene, 1-vinylnaphthalene, divinylnaphthalene, divinylbenzene, trivinylbenzene, vinylbenzyldimethylamine, (4-vinylbenzyl)dimethylaminoethyl ether, vinylpyridine, vinylxylene, diphenylethylene, and halogen-substituted styrene, and
wherein the ethylenically unsaturated acid monomer is one or more selected from the group consisting of acrylic acid, methacrylic acid, itaconic acid, maleic acid, fumaric acid, maleic anhydride, citraconic anhydride, styrene sulfonic acid, monobutyl fumarate, monobutyl maleate, and mono-2-hydroxypropyl maleate.

7. The binder composition of claim 3, wherein the alkyl ester-based monomer is one or more selected from the group consisting of methyl methacrylate, ethyl methacrylate, butyl methacrylate, methyl acrylate, ethyl acrylate, and butyl acrylate.

8. The binder composition of one of claims 1 to 7, wherein the trithiocarbonate-based compound is one or more selected from the group consisting of dibenzyl trithiocarbonate, dimethyl trithiocarbonate, and bis(carboxymethyl) trithiocarbonate,
wherein the mercaptan-based compound is one or more selected from the group consisting of n-octyl mercaptan, n-dodecyl mercaptan, and t-dodecyl mercaptan, and
wherein the solvent is one or more selected from the group consisting of benzene, toluene, xylene, hexane, cyclohexane, methylcyclohexane, ethylcyclohexane, nonane, decane, decalin, tetralin, dodecane, dibromomethane, dichloromethane, chloroform, butyl butyrate, hexyl butyrate, and isobutyl isobutyrate.

9. A method of preparing a binder composition for an all-solid-state secondary battery, comprising:
(a) preparing a copolymer by polymerizing a conjugated diene-based monomer, an aromatic vinyl-based monomer, and an ethylenically unsaturated acid monomer in the presence of a trithiocarbonate-based compound and a mercaptan-based compound; and
(b) dissolving the copolymer, the trithiocarbonate-based compound, and the mercaptan-based compound in a solvent,
wherein a weight average molecular weight (Mw) of the copolymer is 50,000 to 200,000, and a molecular weight distribution (Mw/Mn) is 1 to 5.

10. The method of claim 9, wherein step (a) is performed by emulsion polymerization in the presence of an emulsifier and a polymerization initiator.

11. The method of claim 10, wherein the emulsifier is one or more anionic emulsifiers selected from the group consisting of sodium alkyl diphenyl ether disulfonates, sodium polyoxyethylene alkyl ether sulfates, sodium polyoxyethylene aryl ether sulfates, sodium alkyl sulfates, sodium alkyl benzene sulfonates, and dialkyl sodium sulfosuccinates, and
wherein the polymerization initiator is one or more redox-based polymerization initiators selected from the group consisting of p-menthane hydroperoxide, t-butyl hydroperoxide, diisopropylbenzene hydroperoxide, and cumene hydroperoxide.

12. A slurry composition for a cathode, comprising the binder composition of any one of claims 1 to 8, and a cathode active material.

13. A slurry composition for a solid electrolyte, comprising the binder composition of any one of claims 1 to 8, and a solid electrolyte.

14. The slurry composition of claim 13, wherein the solid electrolyte is a sulfide-based solid electrolyte.

15. An all-solid-state secondary battery comprising a cathode, an anode, and a solid electrolyte,
wherein at least one of the cathode and the solid electrolyte is prepared by applying a slurry composition including the binder composition of any one of claims 1 to 8 and drying a solvent.
